(19) **Europäisches Patentamt / European Patent Office / Office européen des brevets**

(11) **EP 4 704 179 A1**

(12) **EUROPEAN PATENT APPLICATION**
published in accordance with Art. 153(4) EPC

(43) Date of publication:
04.03.2026  Bulletin 2026/10

(21) Application number: 24796885.2

(22) Date of filing: 17.04.2024

(51) International Patent Classification (IPC):
$H01M\ 4/38^{(2006.01)}$     $H01M\ 4/36^{(2006.01)}$

(52) Cooperative Patent Classification (CPC):
H01M 4/364; C01B 32/05; C01B 33/32;
H01M 4/366; H01M 4/386; H01M 4/625;
H01M 2300/0068; Y02E 60/10

(86) International application number:
PCT/JP2024/015249

(87) International publication number:
WO 2024/225132 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.04.2023  JP 2023073484

(71) Applicant: **Panasonic Intellectual Property Management Co., Ltd.**
**Kadoma-shi, Osaka 571-0057 (JP)**

(72) Inventors:
• **MIZOBATA Shun**
  **Kadoma-shi, Osaka 571-0057 (JP)**
• **KOIZUMI Isao**
  **Kadoma-shi, Osaka 571-0057 (JP)**

(74) Representative: **Novagraaf International SA**
**Chemin de l'Echo 3**
**1213 Onex, Geneva (CH)**

(54) **NEGATIVE ELECTRODE ACTIVE MATERIAL FOR SECONDARY BATTERY, AND SECONDARY BATTERY**

(57)    A negative electrode active material for secondary batteries includes silicon-containing particles. The silicon-containing particles each include an ion-conducting phase, and silicon phases dispersed in the ion-conducting phase. In a pore diameter distribution of the silicon-containing particles, a volume-based average pore diameter in a pore diameter range of 2 nm to 100 nm is 50 nm or more and 100 nm or less.

FIG. 1

## Description

[Technical Field]

The present disclosure relates to a negative electrode active material for secondary batteries, and a secondary battery including the negative electrode active material for secondary batteries.

[Background Art]

In a negative electrode of secondary batteries represented by lithium-ion secondary batteries, a negative electrode active material capable of absorbing and releasing lithium ions is used, and graphite is typically used as the negative electrode active material. In recent years, with respect to the negative electrode active material, a composite material containing silicon which has a capacity density larger than graphite has been studied (e.g., Patent Literature 1).

[Citation List]

[Patent Literature]

Patent Literature 1: International Publication WO2020/110917

[Summary of Invention]

[Technical Problem]

A material containing silicon element is promising as a high-capacity negative electrode material for secondary batteries. The material containing silicon element, however, greatly expands and contracts during charging and discharging, tending to induce a side reaction, and easily causing the capacity retention rate in charge-discharge cycles to decrease.

[Solution to Problem]

In view of the above, one aspect of the present disclosure relates to a negative electrode active material for secondary batteries, including: silicon-containing particles, wherein the silicon-containing particles each include an ion-conducting phase, and silicon phases dispersed in the ion-conducting phase, and in a pore diameter distribution of the silicon-containing particles, a volume-based average pore diameter in a pore diameter range of 2 nm to 100 nm is 50 nm or more and 100 nm or less.

Another aspect of the present disclosure relates to a secondary battery, including: a positive electrode, a negative electrode, and an electrolyte, wherein the negative electrode includes the above-described negative electrode active material for secondary batteries.

[Advantageous Effects of Invention]

According to the present disclosure, the expansion and contraction of the negative electrode active material during charging and discharging of the secondary battery is suppressed.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic cross-sectional view of an example of a negative electrode active material (silicon-containing material) according to one embodiment of the present disclosure.

[FIG. 2] A partially cut-away schematic oblique view of a secondary battery according to one embodiment of the present disclosure.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

(Negative electrode active material for secondary batteries)

The negative electrode active material for secondary batteries according to one embodiment of the present disclosure includes silicon-containing particles. The silicon-containing particles each include an ion-conducting phase, and silicon phases dispersed in the ion-conducting phase. Hereinafter, the silicon-containing particles are sometimes referred to as "composite particles".

The ion-conducting phase can include at least one selected from the group consisting of a silicate phase and a silicon oxide phase. Hereinafter, at least one of the silicate phase and the silicon oxide phase is sometimes referred to as a "silicon compound phase". The silicon compound phase can form an amorphous phase. The composite particles in which silicon phases are dispersed in a silicate phase are sometimes referred to as "silicate phase-containing composite particles". The silicate phase-containing composite particles in which the silicate phase is a lithium silicate phase are sometimes referred to as "lithium silicate phase-containing composite particles". The composite particles in which silicon phases are dispersed in a silicon oxide phase are sometimes referred to as "silicon oxide phase-containing composite particles".

In a pore diameter distribution of the silicon-containing particles, the volume-based average pore diameter in the pore diameter range of 2 nm to 100 nm is 50 nm or more and 100 nm or less. In this case, expansion and contraction of the silicon-containing particles during charging and discharging are suppressed, leading to improved cycle characteristics.

In a pore diameter distribution of the silicon-containing particles, the pore diameter range of 2 nm to 100 nm is divided into two, to define a range in which the pore diameter is 2 nm or more and less than X as a first region, and a range in which the pore diameter is X or more and 100 nm or less as a second region. In this case, the volume-based average pore diameter means the value X of the pore diameter at where the cumulative volume in the first region becomes equal to the cumulative volume in the second region. In other words, the average pore diameter is a volume-based median diameter in the pore diameter range of 2 nm to 100 nm, and hereinafter, is sometimes referred to as an "average pore diameter D50".

The silicon-containing particles having an average pore diameter D50 of 50 nm or more have a void structure in which macropores having a pore diameter of 20 nm or more have developed. In association with charging and discharging, the silicon phases expand or contract. At this time, the expanded silicon phases partially fill the voids, and thus, the volume change of the silicon-containing particles as a whole can be suppressed. Along with the expansion and contraction of the silicon phases, the stress applied to the ion-conducting phase can be reduced, so that cracking of the ion-conducting phase is suppressed, and the side reaction with the electrolyte starting from the cracks are also suppressed. Thus, the decrease in capacity retention rate with the progress of charge-discharge cycles can be suppressed.

Especially, the silicon-containing particles having an average pore diameter D50 of 50 nm or more have many pores whose pore diameters are almost the same as those of the silicon phases. Therefore, the silicon phases can easily fill the pores along with the expansion of the silicon phases, and the stress associated with the expansion is hardly transmitted to the ion-conducting phase. Presumably because of this, the expansion and contraction of the silicon-containing particles associated with charging and discharging is likely to be suppressed, and the decrease of the capacity retention rate can be effectively suppressed.

The average pore diameter D50 of the silicon-containing particles may be 50 nm or more, in terms of improving the cycle characteristics. The average pore diameter D50 may be 55 nm or more and 100 nm or less, 60 nm or more and 100 nm or less, 65 nm or more and 100 nm or less, or 60 nm or more and 90 nm or less.

The average pore diameter D50 can be determined by measuring a pore diameter distribution of the silicon-containing particles, using a pore diameter analysis technique, such as the BET method.

Before measuring a pore diameter distribution, 0.20 g to 0.25 g of a sample of the silicon-containing particles is collected, to place the sample in a measurement cell constituted of a glass tube for specific surface area measurement, and then, the interior of the measurement cell is dried and degassed. The drying and degassing is performed for one hour or more at a pressure of 6.67 Pa and a temperature of 250 °C $\pm$ 5 °C. The secondary battery is disassembled, to take out the negative electrode, which is then washed with a solvent, such as dimethyl carbonate. The negative electrode mixture layer may be collected from the dried negative electrode, and the silicon-containing particles are separated and used as the sample. Thereafter, the mass of the sample in the measurement cell is measured to the order of 0.1 mg. Then, the nitrogen adsorption amount of the sample under a temperature of -196 °C is measured, using a specific surface area measuring instrument. For example, an automatic surface area/pore size distribution analyzer "Tristar II 3020" available from Shimadzu Corporation is used as the measuring instrument. From the measurement results of the adsorption amount, the volume-based pore diameter distribution is obtained by the BET multipoint method.

In a logarithmic differential pore volume distribution, the volume is accumulated (integrated) in the pore diameter range of 2 nm to 100 nm, to obtain a total pore volume V1 in the range of 2 nm to 100 nm. The logarithmic differential pore volume is accumulated from the pore diameter 100 nm toward the smaller pore diameters, to obtain a pore diameter X when the sum of the logarithmic differential pore volumes becomes equal to a half of the V1, which is determined as an average pore diameter D50.

The average pore diameter D50 can be controlled, for example, in the later-described production process, through the ball milling conditions when a mixture of silicate and raw material silicon is pulverized to be micronized in a ball mill or the like, and/or the heat treatment conditions when the micronized mixture is subjected to heat treatment. For example, the longer the heat treatment time is, the more likely the silicate phases are to flow so as to fill the pores. Therefore, the porosity is reduced. At this time, the silicate phase flows so as to preferentially fill the pores with large size, and the average pore diameter D50 is reduced. Moreover, the longer the ball milling time is, the finer the particles of the raw material become, and the more the sintered points are formed in the subsequent heat treatment. Therefore, the average pore diameter D50 is reduced.

(Composite particles)

The composite particles have a structure in which the silicon phases are dispersed in an ion-conducting phase (matrix). The stress associated with expansion and contraction of the silicon phases during charging and discharging is relaxed by the ion-conducting phase, and the breakage and cracking of the composite particles are suppressed. Therefore, high capacity resulted from containing silicon and improved cycle characteristics can be both achieved. In addition, with the average pore diameter being 50 nm or more and 100 nm or less, the expansion and contraction along with charging and discharging of the composite particles are suppressed, leading to significantly improved cycle characteristics. The ion-conducting phase may be constituted of one phase, and may be constituted of a plurality of phases.

The silicon oxide phase is constituted of a compound of Si and O. The major component (e.g., 95 to 100 mass%) of the silicon oxide phase may be silicon dioxide. The composite particles may be silicon oxide phase-containing composite particles. The silicon oxide phase-containing composite particles are represented by, for example, a formula $SiO_x$ where $0.5 \leq x < 1.6$.

The silicate phase is constituted of a compound containing a metal element, silicon (Si), and oxygen (O). Examples of the metal element include alkali metal elements such as lithium, and the Group II elements of the long-periodic table. The silicate phase preferably includes at least lithium silicate. In this case, lithium ions can easily enter and exit the silicate phase. The irreversible capacity of the lithium silicate phase is small as compared to that of the silicon oxide phase. The composite particles may be silicate phase-containing composite particles. The ion-conducting phase, for example, contains a silicate phase as a major component, and may contain a silicon oxide phase in a small amount. Here, the "major component" refers to a component that accounts for 50 mass% or more of the total mass of the silicon compound phase, which may account for 70 mass% or more. The silicate phase (lithium silicate phase) can include at least one selected from the group consisting of $Li_2Si_2O_5$, $Li_2SiO_3$, and $Li_4SiO_4$.

An atomic ratio O/Si of O to Si in the lithium silicate is, for example, more than 2 and less than 4. When the O/Si ratio is more than 2 and less than 4 (z in the later-described formula is $0 < z < 2$), it is advantageous in terms of stability and lithium-ion conductivity of the silicate phase. Preferably, the O/Si ratio is more than 2 and less than 3. The atomic ratio Li/Si of Li to Si in the lithium silicate phase is, for example, more than 0 and less than 4.

The composition of the lithium silicate can be represented by a formula: $Li_{2z}SiO_{2+z}$ where $0 < z < 2$. From the viewpoints of the stability, the ease of fabrication, the lithium ion conductivity, and the like, $0 < z \leq 1$ is preferable, and $z = 1/2$ is more preferable. For example, the lithium silicate can be represented by $Li_2SiO_3$ when $z = 1$, and by $Li_2Si_2O_5$ when $z = 1/2$. The lithium silicate desirably contains $Li_2Si_2O_5$ as a major component, and it is desirable that $Li_2Si_2O_5$ is the major component of the whole silicate phase. Here, the "major component" refers to a component that accounts for 50 mass% or more of the mass of the whole lithium silicate or the whole silicate phase, which may account for 70 mass% or more.

The silicate phase can further contain another element M, in addition to Li, Si, and O. By containing another element in the silicate phase, the chemical stability or the lithium ion conductivity of the silicate phase is improved, or the

**EP 4 704 179 A1**

side reaction due to a contact between the silicate phase and the nonaqueous electrolyte is suppressed.

The silicate phase may contain, as another element M other than Li, Si, and O, at least one element selected from the group consisting of alkali metal elements (excluding lithium) and the Group II elements.

By containing an alkali metal element other than Li in the silicate phase, crystallization becomes less likely to proceed, which results in low viscosity in the softened state, and high fluidity. Therefore, in the heat treatment process, the gaps between silicon particles are likely to be filled, so that dense composite particles can be easily produced. The alkali metal element is preferably Na and/or K for their inexpensive prices.

Furthermore, in general, the silicate phase exhibits alkalinity, but the Group II elements have an effect of suppressing the elution of the alkali metal from the silicate phase. Therefore, when the silicate phase contains a Group II element, in preparing a slurry containing a negative electrode active material, the slurry viscosity is likely to be stabilized. This also reduces the necessity for a treatment (e.g., an acid treatment) to neutralize the alkaline component in the composite particles. The Group II element may be either Ca or Mg. In particular, Ca is preferable in that it can improve the Vickers hardness of the silicate phase and further improve the cycle characteristics.

The silicate phase may contain, in addition, as the element M, at least one element selected from the group consisting of boron (B), aluminum (Al), zirconium (Zr), niobium (Nb), tantalum (Ta), vanadium (V), lanthanum (La), yttrium (Y), titanium (Ti), phosphorus (P), bismuth (Bi), zinc (Zn), tin (Sn), lead (Pb), antimony (Sb), cobalt (Co), erbium (Er), fluorine (F), and tungsten (W). From the viewpoints of the resistance to nonaqueous electrolyte and the structural stability of the silicate phase, it is preferable that the element M includes at least one element selected from the group consisting of Zr, Ti, P, Al, and B.

The silicate phase may contain, in addition, as the element M, a rare earth element. When a rare earth element is contained in the silicate phase, the charge-discharge efficiency in the early stage of charge-discharge cycles can be improved. The rare earth element may be any of scandium (Sc), yttrium (Y) and lanthanoid elements. The aforementioned lanthanum (La), yttrium (Y), and erbium (Er) are rare earth elements. The silicate phase may contain at least one selected from the group consisting of cerium (Ce), praseodymium (Pr), and neodymium (Nd), as the rare earth element. From the viewpoint of improving lithium ion conductivity, in particular, it is more preferable that the rare earth element includes La. The proportion of La in the whole rare earth elements is preferably 90 atom% or more and 100 atom% or less.

As the element M other than the alkali metal element and the Group II element, for example, B has low melting point, and is advantageous for improving the fluidity during sintering. Al, Zr and La can improve the hardness while maintaining the ion conductivity. Zr, Ti, P, Al, and B have an effect of increasing the resistance to nonaqueous electrolyte and the structural stability of the silicate phase.

The silicate phase may further contain a very small amount of iron (Fe), chromium (Cr), nickel (Ni), manganese (Mn), copper (Cu), molybdenum (Mo), or other elements.

The element M may form a compound. The compound may be, for example, a silicate of the element M, or an oxide of the element M, depending on the kind of the element M. In the silicate phase, the element M is contained in an amount of, for example, 1 mol% or more and 40 mol% or less, relative to the total amount of elements other than oxygen.

The average particle diameter of the fine silicon phases (before charging for the first time) dispersed in the ion-conducting phase may be 500 nm or less, may be 200 nm or more, and may be 50 nm or less. By micronizing the silicon phases appropriately as above, the changes in volume during charging and discharging are reduced, leading to improved structural stability. In addition, the expansion and contraction of the silicon phases become uniform, and particle cracking is suppressed, leading to improved cycle characteristics. The average particle diameter of the silicon phases is measured by observing a cross section of the composite particle using a SEM or TEM. Specifically, it is determined by averaging the maximum diameters of any 100 silicon phases.

The silicon phases dispersed in the ion-conducting phase are each a particulate phase of simple silicon (Si) and constituted of a single crystallite or a plurality of crystallites. From the viewpoint of reducing the amount of changes in volume due to expansion and contraction of the silicon phases (silicon particles) during charging and discharging, to make it easy to improve the cycle characteristics, the crystallite size of the silicon phases may be 50 nm or less, preferably 20 nm or less, and more preferably 10 nm or less. The crystallite size of the silicon phases may be, for example, 5 nm or more. The crystallite size of the silicon phases is calculated using the Scherrer's equation from the half-value width of the diffraction peak attributed to the Si (111) plane of the X-ray diffraction (XRD) pattern.

From the viewpoints of achieving high capacity and improving the cycle characteristics, the amount of the silicon phases in the composite particle may be 45 mass% or more and 70 mass% or less, may be 50 mass% or more and 70 mass% or less, and may be 58 mass% or more and 70 mass% or less, relative to the whole composite particles.

The average particle diameter of the composite particles is, for example, 1 $\mu$m or more and 25 $\mu$m or less, and may be 4 $\mu$m or more and 15 $\mu$m or less, or 6 $\mu$m or more and 8 $\mu$m or less. In the above range, favorable battery performance is likely to be obtained. The average particle diameter of the composite particles is a particle diameter (volume average particle diameter) at 50% cumulative volume in a particle size distribution measured by a laser diffraction and scattering method. As the measuring instrument, for example, "LA-750", available from Horiba, Ltd. (HORIBA) can be used.

(Coating layer)

The negative electrode active material for secondary batteries may further include a coating layer covering at least part of the surface of the silicon-containing particles. The coating layer is preferably a conductive layer having electrical conductivity. By covering at least part of the surface of the silicon-containing particles with a conductive layer, the conductivity of the silicon-containing particle is improved. The coating layer also has a function of suppressing the entry of electrolyte into the pores (voids) of the silicon-containing particle and suppressing the side reaction. In terms of suppressing the side reaction and maintaining the excellent cycle characteristics, the contained amount of the carbon material is preferably 3 mass% or more and 5 mass% or less, relative to the whole silicon-containing particles including the coating layer.

The coating layer contains, for example, a carbon material with electrical conductivity. The thickness of the coating layer is preferably thin enough not to substantially influence the average particle diameter of the composite particles. From the viewpoint of ensuring electrical conductivity, the thickness of the coating layer is preferably 1 nm or more.

The coating layer or the conductive layer is formed by mixing a raw material of the carbon material with the composite particles, and firing the mixture, to carbonize the raw material of the conductive carbon material. As the raw material of the carbon material, for example, coal pitch or coal tar pitch, petroleum pitch, phenolic resin, and the like can be used. The firing of the mixture of the raw material of the carbon material and the composite particles is performed, for example, in an inert atmosphere (e.g., atmosphere of argon, nitrogen, etc.). The firing temperature is, for example, 450 °C or higher and 1000 °C or lower. Within the above temperature range, a conductive layer with high electrical conductivity can be easily formed on the silicate phase with low crystallinity. The firing temperature is preferably 550 °C or higher and 900 °C or lower, more preferably 650 °C or higher and 850 °C or lower. The firing time is, for example, 1 hour or more and 10 hours or less.

(Method for producing silicon-containing particles)

In the following, an example of a method for producing lithium silicate phase-containing composite particles, as an example of silicon-containing particles, will be described in detail. The composite particles can be produced by, for example, a production method including the following first to fourth steps.

(First step) A step of obtaining a compound for forming an ion-conducting phase.
(Second step) A step of, after the first step, forming the compound for forming an ion-conducting phase and a raw material silicon into a composite in which silicon phases are dispersed in the ion-conducting phase, to obtain a composite intermediate.
(Third step) A step of subjecting the composite intermediate to a heat treatment, to obtain a sintered body containing the ion-conducting phase and the silicon phases dispersed in the ion-conducting phase.
(Fourth step) A step of pulverizing the sintered body, to obtain composite particles each containing the ion-conducting phase and the silicon phases dispersed in the ion-conducting phase.

<First step>

In the first step, a compound for forming an ion-conducting phase is prepared or synthesized. When the ion-conducting phase is a silicate phase, the first step includes, for example, a step 1a of mixing a raw material containing Si and a Li raw material in a predetermined ratio, to obtain a raw material mixture, and a step 1b of firing the raw material mixture, to obtain a raw material silicate. The firing in the step 1b is performed, for example, in an oxidizing atmosphere. The firing temperature in the step 1b is preferably 400 °C or higher and 1200 °C or lower, and more preferably 800 °C or higher and 1100 °C or lower.

The raw material mixture is melted, and the melt is passed between metal rollers into flakes, to produce a silicate. Thereafter, the silicate in the form of flakes is heated at a temperature equal to or higher than the glass transition point and below the melting point in the air atmosphere, to be crystallized. Note that the silicate in the form of flakes can be used without being crystallized. Also, a silicate can be produced by firing a mixture of predetermined amounts of raw materials, without melting it, at a temperature equal to or lower than the melting point, to cause a solid phase reaction.

For the Si raw material, silicon oxide can be used. For the Li raw material, for example, lithium carbonate, lithium oxide, lithium hydroxide, lithium hydride, and the like can be used. In the raw material mixture, another element M other than the aforementioned lithium, silicon, and oxygen may be contained. The element M can be added in the form of a compound containing the element M, to the raw material mixture. In the lithium silicate, the Si raw material that has not reacted with the Li raw material can remain. The remaining Si raw material is dispersed as fine crystals of silicon oxide, in the lithium silicate.

Examples of the lithium compound include lithium carbonate, lithium oxide, lithium hydroxide, and lithium hydride. The lithium compound may be used singly or in combination of two or more kinds.

Examples of the compound containing an element M include oxides, hydroxides, hydrides, halides, carbonates, oxalates, nitrates, and sulfates of the element M. The compound containing an element M may be used singly or in combination of two or more kinds.

<Second step>

In the second step, for example, a mixture of the compound for forming an ion-conducting phase (e.g., a carbon source or a raw material silicate) and a raw material silicon is micronized under application of a shear force to the mixture, to obtain fine particles of a composite intermediate. Here, for example, the compound for forming an ion-conducting phase and the raw material silicon are mixed in a predetermined mass ratio (e.g., a mass ratio of 20:80 to 95:5), and the mixture is micronized using a pulverizer like a ball mill. An organic solvent may be added to the mixture, to perform wet-pulverization. At this time, the raw material silicon is finely pulverized, into silicon phases. The silicon phases are dispersed in the matrix of the compound for forming an ion-conducting phase.

The organic solvent that can be used include alcohols, ethers, fatty acids, alkanes, cycloalkanes, silicate esters, metal alkoxides, and the like. A predetermined amount of the organic solvent may be fed into a pulverization vessel all at once in the early stage of the pulverization, or a predetermined amount of the organic solvent may be intermittently fed into a pulverization vessel dividedly in several times during the pulverization. The organic solvent serves to prevent the adhesion of a pulverized object onto the inner wall of the pulverization vessel.

As the raw material silicon, coarse silicon particles with an average particle diameter of about several $\mu$m to several tens of $\mu$m may be used. The finally obtained silicon phases are preferably controlled to have a crystallite size of 10 nm or more calculated from the Scherrer's equation using the half-value width of a diffraction peak attributed to the Si (111) plane in an X-ray diffraction pattern.

The compound for forming an ion-conducting phase and the raw material silicon may be separately micronized, and then mixed together. Alternatively, without using a pulverizer, silicon nanoparticles and raw material silicate nanoparticles may be separately synthesized, and mixed together. These nanoparticles can be prepared by any known method, such as a gas phase method (e.g., plasma method) or a liquid phase method (e.g., liquid phase reduction method).

<Third step>

In the third step, for example, under application of a pressure to fine particles of the composite intermediate with a hot press or the like, the composite intermediate is sintered, to obtain a sintered body. The firing of the composite intermediate is carried out, for example, in an inert atmosphere (e.g., an atmosphere of argon, nitrogen, etc.). The firing temperature is preferably 450 °C or higher and 1000 °C or lower. When the firing temperature is within the above temperature range, fine silicon phases can be easily dispersed in the silicate phase having low crystallinity. During sintering, the lithium silicate softens and flows so as to fill the gaps between the silicon particles. As a result, a dense block-shaped sintered body including the silicate phase as a sea portion, and the silicon particles as island portions can be obtained. The firing temperature is preferably 550 °C or higher and 900 °C or lower, more preferably 650 °C or higher and 850 °C or lower. The firing time is, for example, 1 hour or more and 10 hours or less.

<Fourth step>

In the fourth step, the sintered body is pulverized to have a desired particle size distribution, to obtain composite particles each containing the silicate phase and the silicon phases dispersed in the silicate phase. By appropriately selecting the pulverization conditions, composite particles having a predetermined average particle diameter can be obtained.

The composition of the composite particles can be determined, for example, by the following analysis method. When analyzing the composite particles contained in the negative electrode of a secondary battery, the analysis can be performed by disassembling a battery in a fully discharged, with respect to the negative electrode taken out from the battery. The taken-out negative electrode is washed with anhydrous ethyl methyl carbonate or dimethyl carbonate, to remove the nonaqueous electrolyte components, and then dried. A cross-section polisher (CP) may be used to obtain a cross section of the negative electrode mixture layer.

<EDX>

From a cross-sectional backscattered SEM electron image of the negative electrode mixture layer, 10 composite particles having a maximum particle diameter of 5 μm or more are randomly selected, to perform an elemental mapping analysis by energy dispersive X-ray (EDX) on each particle. The area percentage of the target element is calculated using an image analysis software. The observation magnification is desirably 2,000 to 20,000 times. The measured values of the area percentage of the predetermined element contained in the 10 particles are averaged. From the obtained average value, the contained amount of the target element can be calculated.

Desirable cross-sectional SEM-EDX analysis measurement conditions are shown below.

<SEM-EDX measurement conditions>

Processing apparatus: SM-09010 (Cross Section Polisher), available from JEOL
Processing conditions: accelerating voltage 6 kV
Current value: 140 μA
Degree of vacuum: $1 \times 10^{-3}$ to $2 \times 10^{-3}$ Pa
Measuring apparatus: Electron microscope SU-70 available from HITACHI
Acceleration voltage during analysis: 10 kV
Field: Free mode
Probe current mode: Medium
Probe current range: High
Anode Ap.: 3
OBJ Ap.: 2
Analysis area: 1 μm square
Analysis software: EDAX Genesis
CPS: 20,500
Lsec: 50
Time constant: 3.2

<AES>

From a cross-sectional backscattered electron image of the negative electrode mixture layer, 10 composite particles having a maximum particle diameter of 5 μm or more are randomly selected, to perform a qualitative/quantitative analysis of elements on each particle using an Auger electron spectroscopy (AES) analyzer (e.g., JAMP-9510F, available from JEOL Corporation). The measurement conditions may be set such that, for example, the acceleration voltage is 10 kV, the beam current is 10 nA, and the analysis region is 20 μmφ. The amounts of a predetermined element contained in the 10 particles are averaged, to determine the contained amount of the element.

Note that, during charging and discharging, due to the decomposition of the nonaqueous electrolyte and other causes, a surface film is formed on surface of the composite particles. Also, as described later, the composite particle may further have a conductive layer that covers the surface of the composite particles. Hence, the mapping analysis by EDX or AES are performed within 1 μm or more inward from the peripheral edge of the cross section of the composite particle, so that the thin surface film and the conductive layer are not included in the measurement range. The mapping analysis also allows for confirming the distribution state of the carbon material inside the composite particle. The measurement of the sample is preferably performed before cycling or in the early stage of cycling because, in the late stage of cycling, it is difficult to make a distinction from the decomposition product of the nonaqueous electrolyte.

<ICP>

A sample of the composite particles is completely dissolved in a heated acid solution (a mixed acid of hydrofluoric acid, nitric acid, and sulfuric acid), and carbon in the residue of dissolution is removed by filtration. Then, the obtained filtrate is analyzed by inductively coupled plasma emission spectroscopy (ICP), to measure a spectral intensity of each element. Subsequently, using a commercially available standard solution of the element, a calibration curve is drawn, from which the amount of each element contained in the composite particles is calculated.

The amounts of Na, K, Al, and B contained in the silicate phase can be quantitatively analyzed in accordance with JIS R3105 (1995) (method for chemical analysis of borosilicate glass).

In the silicate phase-containing composite particles, a silicate phase and silicon phases are present, and they can be distinguished and quantitatively determined by using Si-NMR. The contained amount of Si obtained by the above method is the sum of the amount of Si constituting the silicon phases and the amount of Si in the silicate phase. The amount of Si elements contained in the composite particles is assigned into the silicate phase and the silicon phases, using the results of quantitative analysis by Si-NMR. Note that, as the standard substance necessary for quantitative determination, a mixture containing a silicate phase and silicon phases, in each of which the Si content is already known, in a predetermined ratio may be used.

Desirable Si-NMR measurement conditions are shown below.

<Si-NMR measurement conditions>

Measuring apparatus: Solid nuclear magnetic resonance spectrometer (INOVA-400), available from Varian, Inc.
Probe: Varian 7 mm CPMAS-2
MAS: 4.2 kHz
MAS speed: 4 kHz
Pulse: DD (45° pulse + signal capture time 1H decoupling)
Repetition time: 1200 sec to 3000 sec
Observation width: 100 kHz
Observation center: around -100 ppm
Signal capture time: 0.05 sec
Accumulated number of times: 560
Sample amount: 207.6 mg

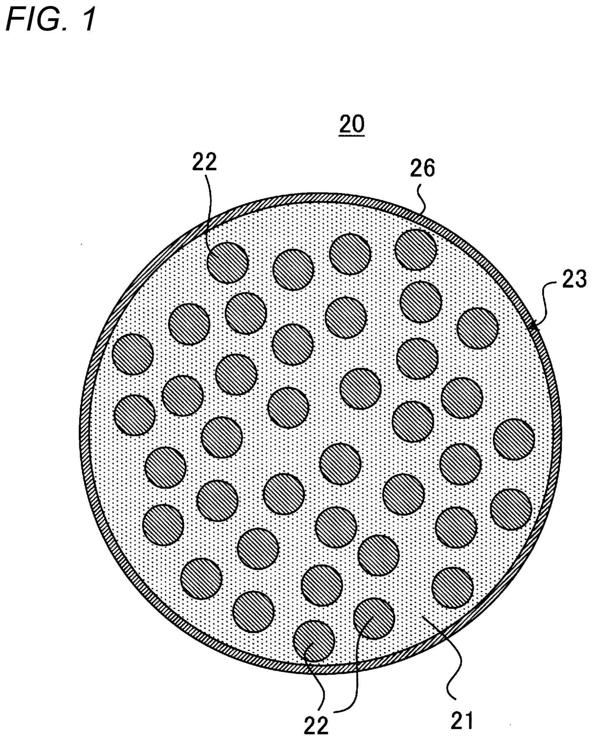

FIG. 1 is a schematic cross-sectional view of an example of the negative electrode active material (composite particle). In FIG. 1, the illustrations of voids or pores that are present in a composite particle 23 are omitted.

A negative electrode active material 20 includes the composite particle 23 (base particle). The composite particle 23 includes an ion-conducting phase 21 and silicon phases (silicon particles) 22 dispersed in the ion-conducting phase 21. The composite particle 23 has a sea-island structure in which fine silicon phases 22 are dispersed in a matrix of the ion-conducting phase 21. The surface of the composite particle 23 is covered with a coating layer 26 having electrical conductivity.

(Secondary battery)

A secondary battery according to an embodiment of the present disclosure includes a positive electrode, a negative electrode, and an electrolyte. The negative electrode includes the above-described negative electrode active material for secondary batteries. Description will be given below of the negative electrode and other components of the secondary battery.

(Negative electrode)

The negative electrode includes, for example, a negative electrode mixture layer containing the above-described negative electrode active material for secondary batteries, and a negative electrode current collector supporting the negative electrode mixture layer. The negative electrode mixture layer can be formed by applying a negative electrode slurry of a negative electrode mixture dispersed in a dispersion medium, onto a surface of the negative electrode current collector, followed by drying. The applied film after drying may be rolled, as necessary. The negative electrode mixture layer may be formed on one surface or both surfaces of the negative electrode current collector.

The negative electrode mixture contains the above-described negative electrode active material for secondary batteries as an essential component, and may contain a binder, a conductive agent, a thickener, and the like, as optional components. The silicon phases in the composite particles can absorb a large amount of lithium ions, and therefore contribute to achieving high capacity of the negative electrode. The amount of the composite particles contained in the negative electrode mixture layer may be 1 mass% or more and 50 mass% or less, relative to the whole negative electrode mixture layer.

The negative electrode active material may further contain another active material that electrochemically absorbs and releases lithium ions. Preferred as another active material is, for example, a carbon-based active material. The composite particles expand and contract in volume in association with charging and discharging. Therefore, increasing their proportion in the negative electrode active material tends to cause a contact failure between the negative electrode active material and the negative electrode current collector. On the other hand, by using the composite particles in combination with a carbon-based active material, it becomes possible to achieve excellent cycle characteristics, while imparting high capacity of the silicon particles to the negative electrode. The ratio of the composite particles to the total of the composite particles and the carbon-based active material is preferably, for example, 0.5 to 15 mass%, more preferably 1 to 5 mass%. This makes it easy to achieve high capacity as well as improved cycle characteristics.

Examples of the carbon-based active material include graphite, graphitizable carbon (soft carbon), and non-graphitizable carbon (hard carbon). In particular, graphite is preferred because of its excellent charge-discharge stability and small irreversible capacity. Graphite means a material having a graphite-like crystal structure, and includes, for example, natural graphite, artificial graphite, graphitized mesophase carbon particles, and the like. The carbon-based active material may be used singly or in combination of two or more kinds.

As the negative electrode current collector, a non-porous conductive substrate (metal foil, etc.), and a porous conductive substrate (mesh, net, punched sheet, etc.) are used. Examples of the material of the negative electrode current collector include stainless steel, nickel, nickel alloy, copper, and copper alloy. The thickness of the negative electrode current collector is, although not limited to, preferably 1 to 50 $\mu$m, more preferably 5 to 20 $\mu$m, in view of the balance between high strength and lightweight of the negative electrode.

Examples of the binder include fluorocarbon resins, polyolefin resins, polyamide resins, polyimide resins, vinyl resins, styrene-butadiene copolymer rubber (SBR), polyacrylic acids, and derivatives thereof. These may be used singly or in combination of two or more kinds. Examples of the conductive agent include carbon black, conductive fibers, fluorinated carbon, and organic conductive materials. These may be used singly or in combination of two or more kinds. Examples of the thickener include carboxymethyl cellulose (CMC), and polyvinyl alcohol. These may be used singly or in combination of two or more kinds.

Examples of the dispersion medium include water, alcohols, ethers, N-methyl-2-pyrrolidone (NMP), and mixed solvents thereof.

(Positive electrode)

The positive electrode includes, for example, a positive electrode current collector, and a positive electrode mixture layer supported on a surface of the positive electrode current collector. The positive electrode mixture layer can be formed by applying a positive electrode slurry of a positive electrode mixture dispersed in a dispersion medium, onto a surface of the positive electrode current collector, followed by drying. The applied film after drying may be rolled, as necessary. The positive electrode mixture layer may be formed on one surface or both surfaces of the positive electrode current collector.

The positive electrode mixture contains a positive electrode active material as an essential component, and can contain a binder, a conductive agent, and the like, as optional components.

As the positive electrode active material, for example, a lithium-transition metal composite oxide can be used. Examples of the lithium-transition metal composite oxide thereof include $Li_aCoO_2$, $Li_aNiO_2$, $Li_aMnO_2$, $Li_aCO_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMePO_4$, and $Li_2MePO_4F$. Here, M is at least one selected from the group consisting of Na, Mg, Sc, Y, Mn, Fe, Co, Ni, Cu, Zn, Al, Cr, Pb, Sb, and B. Me contains at least a transition element (e.g., contains at least one selected from the group consisting of Mn, Fe, Co, and Ni). Here, $0 \leq a \leq 1.2$, $0 \leq b \leq 0.9$, and $2.0 \leq c \leq 2.3$. The value "a" representing the molar ratio of lithium increases and decreases during charging and discharging.

The binder and the conductive agent may be like those exemplified for the negative electrode. As the conductive agent, graphite, such as natural graphite and artificial graphite, may be used.

The shape and the thickness of the positive electrode current collector can be respectively selected from the shapes and the ranges corresponding to those of the negative electrode current collector. Examples of the material of the positive electrode current collector include stainless steel, aluminum, aluminum alloy, and titanium.

(Electrolyte)

The electrolyte may be a liquid electrolyte (electrolyte solution), may be a gel electrolyte, and may be a solid electrolyte. The liquid electrolyte is, for example, an electrolyte solution containing a nonaqueous solvent and a salt dissolved in the nonaqueous solvent. The concentration of the salt in the electrolyte solution is, for example, 0.5 mol/L or more and 2 mol/L or less. The electrolyte solution may contain a known additive.

The gel electrolyte contains a salt and a matrix polymer, or contains a salt, a nonaqueous solvent, and a matrix polymer. As the matrix polymer, for example, a polymer material that absorbs a nonaqueous solvent and turns into a gel is used. Examples of the polymer material include fluorocarbon resins, acrylic resins, polyether resins, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

For example, a nonaqueous electrolyte in a liquid state is prepared by dissolving a salt in a nonaqueous solvent. The salt is an electrolyte salt that ionically dissociates in the electrolyte, and can include, for example, a lithium salt. The electrolyte can contain various additives. The electrolyte is usually used as it is in a liquid state, but may be in a state in which the fluidity is restricted by a gelling agent or the like.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

Other examples of the nonaqueous solvent include cyclic ethers, chain ethers, nitriles such as acetonitrile, and amides such as dimethylformamide.

As the lithium salt, for example, lithium salts of chlorine-containing acids ($LiClO_4$, $LiAlCl_4$, $LiB_{10}Cl_{10}$, etc.), lithium salts of fluorine-containing acids ($LiPF_6$, $LiBF_4$, $LiSbF_6$, $LiAsF_6$, $LiCF_3SO_3$, $LiCF_3CO_2$, etc.), lithium salts of fluorine-containing acid imides ($LiN(CF_3SO_2)_2$, $LiN(CF_3SO_2)(C_4F_9SO_2)$, $LiN(C_2F_5SO_2)_2$, etc.), lithium halides (LiCl, LiBr, LiI, etc.), and the like can be used. These lithium salts may be used singly or in combination of two or more kinds.

The concentration of the lithium salt in the electrolyte may be 1 mol/liter or more and 2 mol/liter or less, and may be 1 mol/liter or more and 1.5 mol/liter or less. By controlling the lithium salt concentration in the above range, an electrolyte having excellent ion conductivity and appropriate viscosity can be obtained. The lithium salt concentration is not limited to the above.

(Separator)

Usually, it is desirable to interpose a separator between the positive electrode and the negative electrode. The separator is excellent in ion permeability and has moderate mechanical strength and electrically insulating properties. As the separator, for example, a microporous thin film, a woven fabric, a nonwoven fabric, and the like can be used. As the material of the separator, polyolefin, such as polypropylene and polyethylene, can be used.

One example of the structure of the secondary battery is a structure in which an electrode group formed by winding the positive electrode and the negative electrode with the separator interposed therebetween is housed in an outer body, together with the nonaqueous electrolyte. Alternatively, instead of the wound electrode group, another form of an electrode group may be adopted, such as a stacked electrode group formed by stacking the positive electrode and the negative electrode with the separator interposed therebetween. The secondary battery may be in any form, such as cylindrical type, prismatic type, coin type, button type, and laminate type.

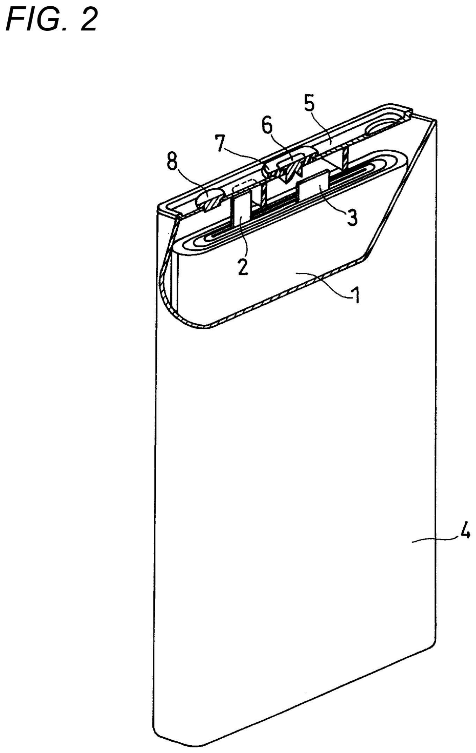

The structure of a prismatic nonaqueous electrolyte secondary battery as an example of a secondary battery according to the present disclosure will be described below with reference to FIG. 2. FIG. 2 is a partially cut-away schematic oblique view of a secondary battery according to one embodiment of the present disclosure.

The battery includes a bottomed prismatic battery case 4, and an electrode group 1 and a nonaqueous electrolyte (not shown) which are housed in the battery case 4. The electrode group 1 has a long belt-shaped negative electrode, a long belt-shaped positive electrode, and a separator interposed between the positive electrode and the negative electrode and preventing them from directly contacting with each other. The electrode group 1 is formed by winding the negative electrode, the positive electrode, and the separator together, around a flat plate-like winding core, and then removing the winding core.

To the negative electrode current collector, one end of a negative electrode lead 3 is attached, by means of welding or the like. The other end of the negative electrode lead 3 is electrically connected, via an insulating plate made of resin (not shown), to a negative electrode terminal 6 disposed at a sealing plate 5. The negative electrode terminal 6 is electrically insulated from the sealing plate 5 by a resin gasket 7. To the positive electrode current collector, one end of a positive electrode lead 2 is attached, by means of welding or the like. The other end of the positive electrode lead 2 is connected, via the insulating plate, to the back side of the sealing plate 5. That is, the positive electrode lead 2 is electrically connected to the battery case 4 serving as a positive electrode terminal. The insulating plate provides insulation between the electrode group 1 and the sealing plate 5 and between the negative electrode lead 3 and the battery case 4. The periphery of the sealing plate 5 is fitted to the opening end of the battery case 4, and the fitted portion is laser-welded. In this way, the opening of the battery case 4 is sealed with the sealing plate 5. A nonaqueous electrolyte injection port provided in the sealing plate 5 is closed with a sealing plug 8.

(Supplementary notes)

The above description of embodiments discloses the following techniques.

(Technique 1)

A negative electrode active material for secondary batteries, comprising:

silicon-containing particles, wherein
the silicon-containing particles each include an ion-conducting phase, and silicon phases dispersed in the ion-conducting phase, and
in a pore diameter distribution of the silicon-containing particles, a volume-based average pore diameter in a pore diameter range of 2 nm to 100 nm is 50 nm or more and 100 nm or less.

(Technique 2)

The negative electrode active material for secondary batteries according to technique 1, wherein the ion-conducting phase includes at least one selected from the group consisting of a silicate phase and a silicon oxide phase.

(Technique 3)

The negative electrode active material for secondary batteries according to technique 2, wherein the silicate phase includes at least one selected from the group consisting of $Li_2Si_2O_5$, $Li_2SiO_3$, and $Li_4SiO_4$.

(Technique 4)

The negative electrode active material for secondary batteries according to any one of techniques 1 to 3, further comprising

a coating layer covering at least part of a surface of the silicon-containing particles, wherein
the coating layer contains a carbon material, and
a contained amount of the carbon material is 3 mass% or more and 5 mass% or less, relative to the whole silicon-containing particles including the coating layer.

(Technique 5)

The negative electrode active material for secondary batteries according to any one of techniques 1 to 4, wherein an amount of the silicon phases in the silicon-containing particle is 45 mass% or more and 70 mass% or less, relative to the whole silicon-containing particles.

(Technique 6)

The negative electrode active material for secondary batteries according to any one of techniques 1 to 5, wherein an average particle diameter of the silicon-containing particles is 6 $\mu$m or more and 8 $\mu$m or less.

(Technique 7)

A secondary battery, comprising:

a positive electrode, a negative electrode, and an electrolyte, wherein
the negative electrode includes the negative electrode active material for secondary batteries according to any one of techniques 1 to 6.

[Examples]

The present disclosure will be more specifically described below with reference to Examples. The present disclosure, however, is not limited to the following Examples.

<<Example 1>>

(Production of composite particles)

<First step>

Silicon dioxide and $Li_2CO_3$ were mixed, and the mixture was fired in air at 950 °C for 10 hours, to obtain a silicate. The obtained silicate was pulverized to have an average particle diameter of 10 $\mu$m.

<Second step>

The silicate was mixed with a raw material silicon (3N, average particle diameter 10 $\mu$m). In the mixture, the mass ratio of the silicate to the raw material silicon was 42:58.

The mixture was packed in a pot (made of SUS, volume: 500 mL) of a planetary ball mill (P-5, available from Fritsch Co., Ltd.). Then, 24 SUS balls (diameter 20 mm) were put into the pot, and with the lid closed, the mixture was pulverized at 200 to 300 rpm for 25 hours in an inert atmosphere.

<Third step>

Next, the powdery mixture was taken out in an inert atmosphere, which was fired in an inert atmosphere under application of a pressure with a hot press, into a sintered body of the mixture.

<Fourth step>

Next, the obtained sintered body was crushed, and passed through a 40-$\mu$m mesh, to obtain composite particles having an average particle size (median size) of 6 $\mu$m. The composition of the major component of the silicate phase in the composite particles determined by the already-described method was $Li_2Si_2O_5$.

Next, the composite particles was mixed with coal tar pitch in a mass ratio of 95:5, and then fired at 800 °C in an argon atmosphere, to form a coating layer having electrical conductivity that covers at least part of the surface of the composite particles, to obtain silicon-containing particles. The coal tar pitch was converted into amorphous carbon through firing.

The mass ratio of the coating layer to the whole silicon-containing particles including the coating layer was calculated from the difference in mass between the composite particles before and after the coating layer was formed, which was 3 mass%.

The composite particle was fed into in a measurement cell for specific surface area measurement, and the pore diameter distribution was measured by the already-described method. From the logarithmic differential pore volume distribution, the average pore diameter D50 was calculated by the already-described method, based on the distribution in the pore diameter range of 2 nm to 100 nm. The average pore diameter D50 was 55 nm.

Furthermore, based on the logarithmic differential pore volume distribution, from a total pore volume V2 in the pore diameter range of a predetermined value Y or more and 100 nm or less, a porosity P(Y) supposing that the volume of the whole voids was V2 was determined, to express the porosity P as a function of the pore diameter Y. A pore diameter $Y_P$ at the porosity P being 50% was determined. The pore diameter $Y_P$ was 50 nm.

(Production of negative electrode)

The composite particles were mixed with graphite in a mass ratio of 5:95 and used as a negative electrode active material. Water was added to a negative electrode mixture containing the negative electrode active material, a Na salt of CMC, and SBR in a mass ratio of 97.5:1:1.5, which were then stirred together, to prepare a negative electrode slurry. Next, the negative electrode slurry was applied onto a surface of a copper foil, so that the mass of the negative electrode mixture per 1 $m^2$ was 190 g, and the applied film was dried and then rolled, to produce a negative electrode with a negative electrode mixture layer having a density of 1.5 $g/cm^3$ formed on each of both surfaces of the copper foil.

(Production of positive electrode)

NMP was added to a positive electrode mixture containing lithium cobalt oxide, acetylene black, and PVDF in a mass ratio of 95:2.5:2.5, which were then stirred together, to prepare a positive electrode slurry. Next, the positive electrode slurry was applied onto a surface of an aluminum foil, and the applied film was dried and then rolled, to produce a positive electrode with a positive electrode mixture layer having a density of 3.6 $g/cm^3$ formed on each of both surfaces of the aluminum foil.

(Preparation of nonaqueous electrolyte)

$LiPF_6$ was dissolved at a concentration of 1.0 mol/L in a mixed solvent containing EC and DEC in a volume ratio of 3:7, to prepare a nonaqueous electrolyte (electrolyte solution).

(Fabrication of secondary battery)

The positive electrode and the negative electrode, each with a tab attached, were wound with a separator interposed therebetween, to prepare an electrode group in which the tab was located at the outermost periphery. The electrode group was inserted into an outer body made of an aluminum laminate film, and vacuum-dried at 105 °C for 2 hours, and the nonaqueous electrolyte was injected thereinto. Then, the opening of the outer body was sealed, to obtain a battery A1 of Example 1.

<<Examples 2 to 7, Comparative Examples 1 to 5>>

In the production of composite particles, the pulverizing conditions in the second step, the firing conditions in the third step, the mixing ratio between the silicate and the raw material silicon, and/or the mass ratio of the coating layer to the whole silicon-containing particles were changed from those in Example 1, to obtain composite particles differing in the average pore diameter D50 from those of Example 1.

In Examples 2 and 3, in the production of composite particles, the pulverizing time in the second step was changed to 20 hours and 17 hours, respectively.

In Example 4, in the production of composite particles, the mass ratio of the silicate to the raw material silicon in the mixture of silicate and raw material silicon was changed to 40:60.

In Example 5, in the production of composite particles, the mixing ratio between the composite particles and the coal tar pitch when forming a coating layer having electrical conductivity was changed. The coating layer was formed such that the mass ratio of the coating layer to the whole silicon-containing particles including the coating layer was 4 mass%.

In Example 6, in the production of composite particles, the mixing ratio between the composite particles and the coal tar pitch when forming a coating layer having electrical conductivity was changed. The coating layer was formed such that the mass ratio of the coating layer to the whole silicon-containing particles including the coating layer was 5 mass%.

In Example 7, in the production of composite particles, the average particle diameter of the composite particles in the fourth step was changed to 8 $\mu$m. In addition, the mixing ratio between the composite particles and the coal tar pitch when forming a coating layer having electrical conductivity was changed. The coating layer was formed such that the mass ratio of the coating layer to the whole silicon-containing particles including the coating layer was 5 mass%.

In Comparative Examples 1 to 3, in the production of composite particles, the average particle diameter of the composite particles in the fourth step was changed to 5 $\mu$m. In addition, the mixing ratio between the composite particles and the coal tar pitch when forming a coating layer having electrical conductivity was changed. The coating layer was formed such that the mass ratio of the coating layer to the whole silicon-containing particles including the coating layer was 2 mass%.

In Comparative Example 4, in the production of composite particles, the mass ratio of the silicate to the raw material silicon in the mixture of silicate and raw material silicon was changed to 40:60. In addition, like in Comparative Examples 1 to 3, the average particle diameter of the composite particles in the fourth step was changed to 5 $\mu$m, and the mixing ratio between the composite particles and the coal tar pitch when forming a coating layer having electrical conductivity was changed. The coating layer was formed such that the mass ratio of the coating layer to the whole silicon-containing particles including the coating layer was 2 mass%.

In Comparative Example 5, in the production of composite particles, the pulverizing time in the second step was changed to 30 hours. In addition, the average particle diameter of the composite particles in the fourth step was changed to 9 $\mu$m. Furthermore, the mixing ratio between the composite particles and the coal tar pitch when forming a coating layer having electrical conductivity was changed, and the coating layer was formed such that the mass ratio of the coating layer to the whole silicon-containing particles including the coating layer was 2.5 mass%.

Except for the above, in the same manner as in Example 1, composite particles were produced, and negative electrodes and secondary batteries using the composite particles as the active material were produced, to obtain batteries A2 to A7 and B1 to B5 according to Examples 2 to 7 and Comparative Examples 1 to 5, respectively.

(Evaluation)

With respect to each of the batteries, a constant-current charging was performed at a current of 1 It (800 mA) until the voltage reached 4.2 V, and then, a constant-voltage charging was performed at 4.2 V until the current reached 1/20 It (40 mA).

The negative electrode was removed from the charged battery. After washing and drying the negative electrode with an organic solvent, the negative electrode was measured for its thickness at 10 randomly selected points using a constant-pressure thickness meter, to determine an average value of the thicknesses as a negative electrode thickness T1 after charging and discharging. The ratio expressed as a percentage of the negative electrode thickness T1 after charging and discharging, relative to a negative electrode thickness T0 immediately after production before fabrication of the secondary battery was evaluated as a negative electrode expansion rate. The negative electrode expansion rate is expressed by the following equation.

$$\text{Negative electrode expansion rate} = (T1/T0) \times 100$$

The evaluation results are shown in Table 1. The information on the composite particles used in the negative electrode active material of each battery, including the ratio of silicon phases, the pore diameter $Y_P$ at the porosity P being 50%, the average pore diameter D50, the proportion (wt%) of the coating layer, and the average particle diameter is also shown in Table 1.

[Table 1]

| battery | composite particles | | | | | negative electrode expansion rate (%) |
| | Si ratio (%) | pore diameter $Y_P$ at porosity being 50% (nm) | average pore diameter D50 (nm) | coating layer (wt%) | average particle diameter (nm) | |
| --- | --- | --- | --- | --- | --- | --- |
| A1 | 58 | 50 | 55 | 3 | 6 | 115 |
| A2 | 58 | 60 | 70 | 3 | 6 | 110 |
| A3 | 58 | 70 | 95 | 3 | 6 | 105 |
| A4 | 60 | 60 | 65 | 3 | 6 | 108 |
| A5 | 58 | 60 | 60 | 4 | 6 | 110 |
| A6 | 58 | 70 | 70 | 5 | 6 | 104 |
| A7 | 58 | 70 | 70 | 5 | 8 | 104 |
| B1 | 58 | 20 | 20 | 2 | 5 | 140 |
| B2 | 58 | 30 | 25 | 2 | 5 | 135 |
| B3 | 58 | 40 | 30 | 2 | 5 | 130 |
| B4 | 60 | 20 | 25 | 2 | 5 | 145 |
| B5 | 58 | 20 | 20 | 2.5 | 9 | 140 |

Table 1 shows that, in the batteries A1 to A7, in which the composite particles having an average pore diameter D50 of 50 nm or more and 100 nm or less were used as the negative electrode active material, the expansion of the composite particles during charging and discharging was suppressed, and the expansion of the negative electrode was suppressed.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Industrial Applicability]

The secondary battery according to the present disclosure is useful as a main power source for mobile communication devices, portable electronic devices, etc.

[Reference Signs List]

1: electrode group, 2: positive electrode lead, 3: negative electrode lead, 4: battery case, 5: sealing plate, 6: negative electrode terminal, 7: gasket, 8: sealing plug, 20: negative electrode active material, 21: ion-conducting phase, 22: silicon phase, 23: composite particle, 26: coating layer

## EP 4 704 179 A1

**Claims**

1.  A negative electrode active material for secondary batteries, comprising:

    silicon-containing particles, wherein
    the silicon-containing particles each include an ion-conducting phase, and silicon phases dispersed in the ion-conducting phase, and
    in a pore diameter distribution of the silicon-containing particles, a volume-based average pore diameter in a pore diameter range of 2 nm to 100 nm is 50 nm or more and 100 nm or less.

2.  The negative electrode active material for secondary batteries according to claim 1, wherein the ion-conducting phase includes at least one selected from the group consisting of a silicate phase and a silicon oxide phase.

3.  The negative electrode active material for secondary batteries according to claim 2, wherein the silicate phase includes at least one selected from the group consisting of $Li_2Si_2O_5$, $Li_2SiO_3$, and $Li_4SiO_4$.

4.  The negative electrode active material for secondary batteries according to any one of claims 1 to 3, further comprising

    a coating layer covering at least part of a surface of the silicon-containing particles, wherein
    the coating layer contains a carbon material, and
    a contained amount of the carbon material is 3 mass% or more and 5 mass% or less, relative to the whole silicon-containing particles including the coating layer.

5.  The negative electrode active material for secondary batteries according to any one of claims 1 to 3, wherein an amount of the silicon phases in the silicon-containing particle is 45 mass% or more and 70 mass% or less, relative to the whole silicon-containing particles.

6.  The negative electrode active material for secondary batteries according to any one of claims 1 to 3, wherein an average particle diameter of the silicon-containing particles is 6 $\mu$m or more and 8 $\mu$m or less.

7.  A secondary battery, comprising:

    a positive electrode, a negative electrode, and an electrolyte, wherein
    the negative electrode includes the negative electrode active material for secondary batteries according to any one of claims 1 to 3.

FIG. 1

FIG. 2

## INTERNATIONAL SEARCH REPORT

| International application No. |
| --- |
| **PCT/JP2024/015249** |

**A. CLASSIFICATION OF SUBJECT MATTER**

*H01M 4/38*(2006.01)i; *H01M 4/36*(2006.01)i
FI:  H01M4/38 Z; H01M4/36 A; H01M4/36 C

According to International Patent Classification (IPC) or to both national classification and IPC

**B. FIELDS SEARCHED**

Minimum documentation searched (classification system followed by classification symbols)

H01M4/38; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022/044454 A1 (PANASONIC INTELLECTUAL PROPERTY MANAGEMENT CO., LTD.) 03 March 2022 (2022-03-03) claims | 1-7 |
| A | WO 2023/053946 A1 (PANASONIC INTELLECTUAL PROPERTY MANAGEMENT CO., LTD.) 06 April 2023 (2023-04-06) claims | 1-7 |
| A | JP 2013-077563 A (KABUSHIKI KAISHA TOYOTA CHUO KENKYUSHO) 25 April 2013 (2013-04-25) claims | 1-7 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **02 July 2024** | **09 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/015249**

| Patent document cited in search report | | | Publication date (day/month/year) | Patent family member(s) | | | Publication date (day/month/year) |
|---|---|---|---|---|---|---|---|
| WO | 2022/044454 | A1 | 03 March 2022 | US claims | 2023/0307612 | A1 | |
| | | | | EP | 4206133 | A1 | |
| | | | | CN | 116157358 | A | |
| WO | 2023/053946 | A1 | 06 April 2023 | (Family: none) | | | |
| JP | 2013-077563 | A | 25 April 2013 | US claims | 2013/0084501 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020110917 A